# EUROPÄISCHE PATENTSCHRIFT

(11) **EP 3 740 343 B1**
(45) Veröffentlichungstag und Bekanntmachung des Hinweises auf die Patenterteilung: **06.12.2023**
(21) Anmeldenummer: 19712500.8
(22) Anmeldetag: 17.01.2019
(51) Int. Cl.: B23P 19/04, B60J 10/00, G01B 11/24

(54) **VORRICHTUNG ZUR LAGEERKENNUNG EINER DICHTUNG**
DEVICE FOR DETECTING THE POSITION OF A SEAL
DISPOSITIF DE DÉTECTION DE POSITION D'UN JOINT

(30) Priorität: 19.01.2018 DE 102018101248; 27.04.2018 DE 102018110303
(43) Veröffentlichungstag der Anmeldung: 25.11.2020
(73) Patentinhaber: ATN Hölzel GmbH, 02736 Oppach (DE); Bayerische Motoren Werke Aktiengesellschaft, 80809 München (DE)
(72) Erfinder: RUDOLF, Philipp, 02736 Beiersdorf (DE); LANGGÄRTNER, Lukas, 80802 München (DE); LAUDAN, Alexander, 80937 München (DE)
(74) Vertreter: Schied, Sebastian
(86) Internationale Anmeldenummer: PCT/DE2019/100046
(87) Internationale Veröffentlichungsnummer: WO 2019/141317

(56) Entgegenhaltungen:
- EP-A1- 2 283 964
- WO-A1-2017/153154
- DE-A1- 19 742 257
- DE-A1-102005 018 459
- DE-A1-102010 048 482
- DE-B3-102012 106 613

## Beschreibung

Vorrichtung zur Lageerkennung einer Dichtung, insbesondere einer Türdichtung, auf einem Bauteil, insbesondere an einem Fahrzeug.

Die hier beschriebene Lageerkennung bezieht insbesondere auf aufgeklebte Profildichtungen oder Türdichtungen sowie Dichtungen auf einem Türflansch, wobei auch die Lageerkennungen anderer oder weiterer Dichtungen auf anderen Bauteilen oder Flächen eingeschlossen sind.

Mittels der erfindungsgemäßen Lageerkennung lassen sich Dichtungen die automatisiert, manuell oder anderweitig auf das jeweilige Bauteil appliziert worden, überprüfen. Insofern ist ein universeller Einsatz möglich. Umfasst sind daher auch Dichtungen, welche jeweils voneinander unabhängig an oder für Karosserieöffnungen, wie beispielsweise Hecktüren, Kofferraumklappen, Kofferraumtüren oder Fenster sowie deren speziellen konstruktiven Gestaltungen mit Flansch, Falz oder Fläche zu applizieren sind. Die Dichtungen können zudem umlaufende oder bereichsweise umlaufende Dichtungen oder Türdichtungen oder Abschnitte von Dichtungen sein.

Das Problem bei Profildichtungen, insbesondere an einem Fahrzeug ist, dass diese bei fehlerhafter Anbringung oder bei die vorgegebene Toleranz überschreitender Anbringung einerseits gegebenenfalls übermäßig beansprucht und gequetscht werden, was zu einer vorzeitigen Alterung oder Abnutzung oder Zerstörung führt und eine Montage der Tür oder gar Nutzung der Tür unmöglich macht oder erheblich erschwert. Andererseits wird der geforderte Zweck der Dichtung nicht erfüllt, da gegebenenfalls Lücken entstehen die zu einer erhöhten Geräuschkulisse im Fahrzeug führen oder den Eintritt von Feuchtigkeit ermöglichen, was jedoch jeweils zu vermeiden ist.

Infolge der fehlerhaften Anbringung oder der die vorgegebene Toleranz überschreitenden Anbringung hat eine Nachbearbeitung zu erfolgen, welche zeitaufwändig und kostenintensiv ist und innerhalb eines automatisierten Herstellungsprozesses zu erheblichen Verzögerungen führt, da Nacharbeiten gegebenenfalls manuell erfolgen.

Da es jedoch auch zu Bauteiltoleranzen kommt, hat eine Beurteilung der Lage der Dichtung in Bezug auf deren Toleranzen bei der Anbringung auf dem Bauteil unter Berücksichtigung der Bauteiltoleranzen zu erfolgen.

Derzeit wird die Lage der Dichtung manuell mittels Messschieber, Stahlmaß oder Schablonen realisiert. Andere Methoden messen an forminstabilen Bereichen. Die derzeitigen Qualitätskontrollen erfolgen manuell und nur als Stichprobenprüfung an wenigen Punkten. Dies ist zeitaufwendig, da die Bauteile aus einem automatisierten Prozess entnommen und in diesen nach positiver Kontrolle wieder zugeführt werden müssen.

Zudem erfolgt die Dichtungsapplikation derzeit nur unter beschränkter Berücksichtigung der jeweiligen Bauteiltoleranzen. Damit werden bereits Bauteile mit einer Dichtung versehen, an denen eine gegebenenfalls außerhalb der Toleranzen liegenden Applikation der Dichtung erfolgt, wobei dies gegebenenfalls nicht an der Applikation der Dichtung lag, sondern am Bauteil und erst nach der nachgelagerten Lagekontrolle dies festgestellt wird. WO 2017/153154 A1 offenbart eine gattungsgemäße Vorrichtung zur Durchführung eines Verfahrens zur automatisierten Lageerkennung einer aufgeklebten Dichtung.

Aufgabe der Erfindung ist es daher, eine Vorrichtung zur automatisierten Lageerkennung einer Dichtung zu schaffen, wobei neben der Lage der Dichtung auf dem jeweiligen Bauteil auch die Bauteiltoleranzen erfasst werden können, wobei anhand der erfassten Lage und Bauteiltoleranzen eine Qualitätsbewertung ermöglicht wird. Hierbei sollen neben einer sequentiellen auch eine lückenlose Lageerkennung und Qualitätskontrolle ermöglicht werden.

Die Aufgabe wird durch die Merkmale des Hauptanspruches gelöst.

Weiterhin wird die Aufgabe durch die Umsetzung der Merkmale des Nebenanspruches gelöst.

Die zugrundeliegende Lösung beschreibt ein Messverfahren, welches erlaubt, während der Applikation einer Türdichtung insbesondere im Automatikprozess die Lage der Dichtung zu messen. Dass bedeutet, dass die Messung für die Lageerkennung kontinuierlich erfolgt und damit auch simultan allein oder bereits während des Applikationsprozesse erfolgt. Diese Messung kann jedoch auch sequentiell, also nur an vorgegebenen Punkten erfolgen, sofern dies der Prozess erfordert. Dabei soll der formstabile Bereich der Dichtung, beispielswiese der Dichtungsfuß als Bezugspunkt verwendet werden. Zum Messen der Lage der Dichtung sollen dazu auch Merkmale am Bauteil wie einer Tür also Konturen oder räumliche und/oder flächige Merkmale verwendet werden, dies soll sicherstellen, dass eine relative Lagebestimmung der Dichtung ermöglicht wird.

Beim Verfahren zur automatisierten Lageerkennung einer Dichtung in Bezug auf ein Bauteil oder zu zumindest einem Bauteilbereich wird während oder nach der automatisierten Applikation der Dichtung mittels zumindest eines Sensors die Relativlage der Dichtung in Abhängigkeit des Bauteils oder des zu zumindest einen Bauteilbereichs erfasst.

Hierfür kommt eine Vorrichtung zur Durchführung des Verfahrens zur automatisierten Lageerkennung einer umlaufenden oder bereichsweise verlaufenden Dichtung zum Einsatz, die in Bezug auf ein Bauteil oder auf zumindest einen Bauteilbereich mittels mindestens eines Sensors mit jeweils einem Erfassungsbereich die Dichtung während oder nach deren Applikation und/oder das Bauteil oder den zumindest einen Bauteilbereich erfasst, wobei der zumindest eine Sensor so angeordnet ist, dass seine Haupterfassungsrichtung zur Verlaufsrichtung der Dichtung oder des Bauteils oder des zumindest einen Bauteilbereich rechtwinklig oder in einem Winkel von bis zu 45 Grad von einer rechtwinkligen Anordnung abweichend ausgerichtet ist. Der Erfassungsbereich ist je nach Sensortyp fächerförmig oder kegelförmig und weitet sich vom Sensor ausgehend, so dass ein ausgedehnter flächiger und je nach Dichtung oder Bauteil auch räumlicher Bereich erfasst wird.

In einer bevorzugten Ausführung der Vorrichtung kommen zwei Sensoren zum Einsatz. Je nach Dichtung und/oder Bauteil ist dies erforderlich, da es gegebenenfalls zu Abschattungen kommen kann, welche sich je nach konstruktiver Ausführung der Dichtung oder des Bauteils ergeben. Kommen indes einfache oder nur im geringen Umfang gekrümmte Dichtungen oder nur gering oder nicht gekrümmte Bauteile in Bezug zur Anbringung und Überwachung der Lage der Dichtung zum Einsatz, kann auch nur ein Sensor verwendet werden (nicht Teil der Erfindung).

Neben dem gezeigten Einsatzfeld besteht die Möglichkeit der Anwendung für weitere Anlagen, bei welchen die Dichtung automatisiert appliziert wird und welche den Einsatz einer zuverlässigen Lageerkennung bedürfen.

Der Vorteil besteht in der vollständigen Prüfung der Bauteile. Aktuell werden nur Stichproben angestellt, oder eine fehlerhafte Applikation bei dem sogenannten Wassertest oder bei der Montage des jeweiligen Bauteils, beispielsweise einer Fahrzeugtür bemerkt. Als Folge muss das entsprechende Bauteil, beispielsweise die entsprechende Fahrzeugtür wieder demontiert, die Dichtung entfernt, eine neue Dichtung appliziert und das Bauteil, beispielsweise die entsprechende Fahrzeugtür wieder montiert werden. Der Aufwand für die Korrektur einer fehlerhaften Tür beträgt ca. 50 min in der Nacharbeit. Mit der o.g. Erfindung kann diese auf 5 min. verkürzt werden, da sofort nach der Applikation reagiert werden kann und hier die Dichtung gleich im Prozess nachgearbeitet werden kann, z.B. durch manuelle Nacharbeit oder dem Wiederzuführen des Automatikprozesses.

Ein Vorteil besteht weiterhin darin, dass das Verfahren auch bereits vor der Applikation zum Einsatz kommen kann, um das Bauteil auszumessen und damit bereits eine Lagekorrektur durchzuführen, welche den anschließenden Applikationsprozess der Dichtung beeinflusst.

Vorteilhafte Ausgestaltungen der Vorrichtung sind in den Unteransprüchen dargestellt.

Indem die Lageerkennung der Dichtung zu zumindest einer Geometrie des Bauteils oder des zumindest einen Bauteilbereichs erfolgt, wird eine genauere Lageerkennung und damit eine genauere Applikation der Dichtung erreicht. Hierbei wird eine Gesamtbetrachtung sowie eine detaillierte Betrachtung hinsichtlich der konstruktiven Gestaltung des Bauteils oder des jeweiligen Bauteilbereiches ermöglicht, wodurch die Lageerkennung der Dichtung zuverlässiger und genauer wird.

In einer Weiterbildung werden räumliche und/oder flächige Merkmale des Bauteils oder des Bauteilbereichs erfasst, wodurch die Lageerkennung genauer wird, da die Lagererkennung auf die Erfassung verschiedener oder weiterer Parameter des Bauteils oder des Bauteilbereichs mit gestützt wird und zudem Bauteiltoleranzen mit erfasst werden, welche unmittelbar berücksichtigt oder zu einem Aussondern des Bauteils führen können.

Weiterhin werden räumliche und/oder flächige Merkmale der Dichtung zumindest bereichsweise erfasst, wodurch die Lageerkennung ebenfalls genauer wird, da für die Lagererkennung verschiedene oder weitere Parameter der Dichtung erfasst werden, wodurch neben der Erfassung der konkreten Lage auch Toleranzen in der Form oder andere Abweichungen erfasst und dem Prozess der Applikation zugeführt werden können.

Zu räumlichen und/oder flächigen Merkmalen gehören beispielsweise Löcher, Vertiefungen, Einschnitte, Markierungen oder Farbgebungen sowie Biegungen oder Abstufungen oder Kanten.

Unter räumlichen und/oder flächigen Merkmalen wird auch die Kontur verstanden.

Nach der Erfindung wird die Dichtung an einem formstabilen Bereich erfasst. Somit lassen sich Messfehler weitestgehend vermeiden oder zumindest reduzieren, da der formstabile Bereich kaum oder keinen Änderungen durch eine Verformung beim Applizieren unterliegt und somit ausgehend von diesem formstabilen Bereich bei jeder und für jede Messung weitestgehend einheitliche Ausgangspunkte oder Bezugspunkte vorliegen.

Indem eine Querschnittsveränderung der Dichtung, insbesondere des flexiblen Profils dieser Dichtung erfolgt wird die Zuverlässigkeit der Messung zu erhöht, da hierdurch einerseits definierte oder einheitliche Querschnitte für die Messung geschaffen werden und anderseits Abschattungen durch die flexiblen Profilbereiche beseitigt werden oder der formstabile Bereich für die Messung vorübergehend freigelegt wird.

In einer Weiterbildung erfolgt die Lagererkennung simultan, umlaufend oder punktuell, wodurch erreicht wird, dass unmittelbar und in sehr geringen Messabständen die Lage der Türdichtung ermittelt wird. Damit wird online, also während der Applikation, die Lage der Türdichtung gemessen. Es lässt sich ein Messergebnis ausgegeben, welches durch Parameter eingegrenzt werden kann und ein Ergebnis im Sinne von in Ordnung oder nicht in Ordnung auszugeben. Durch das simultane Messen kann bereits während der Applikation der Dichtung, korrigierend auf die folgende Applikation eingegangen werden. Zudem kann bereits vor der Applikation das Bauteil oder den Bauteilbereich ausgemessen und damit bereits eine Lagekorrektur durchgeführt werden, welche den anschließenden Applikationsprozess der Dichtung beeinflusst und begünstigt.

Ergänzend erfolgt die Lageerkennung als Abstandsmessung, wodurch die Lagererkennung verbessert und genauer wird.

In dem die Lageerkennung nach dem Triangulationsverfahren erfolgt, lassen sich genauere Verläufe und Bereiche sowie Lagen der Dichtung oder des Bauteils oder Bauteilbereichs für beliebige Konturen oder Oberflächenverlaufe erfassen.

Indem bei zwei oder mehr Sensoren von zumindest zwei Sensoren die jeweiligen Erfassungsbereiche in einer Ebene angeordnet sind, lassen sich auch komplexe oder weitläufige oder gekrümmte oder anderweitig räumlich ausgebildete Geometrien zuverlässiger erfassen, da eine einheitliche oder zusammenhängende Messung sowie ein einheitliches oder zusammenhängendes Ergebnis ermöglicht werden, was die Qualität der Messung bzw. der Lagererkennung verbessert. Verwerfungen im Ergebnis, welche durch unterschiedliche Messstellen auf unterschiedlichen Ebenen entstehen können, werden vermieden.

Mit der Weiterbildung, dass bei zwei oder mehr Sensoren entlang der Verlaufsrichtung der Dichtung oder des Bauteils oder des zumindest einen Bauteilbereichs zumindest zwei Sensoren versetzt angeordnet sind, lassen sich auch langestreckte Verläufe und darin enthaltenen Abweichungen oder Verwerfungen erfassen.

Indem bei zwei oder mehr Sensoren zumindest zwei Sensoren seitlich zueinander versetzt angeordnet sind, lassen sich ebenfalls gekrümmte oder anderweitig räumlich ausgebildete Geometrien zuverlässiger erfassen, wobei eine einheitliche oder zusammenhängende Messung sowie ein einheitliches oder zusammenhängendes Ergebnis ermöglicht werden, was die Qualität der Messung bzw. der Lagererkennung verbessert.

Durch die von zumindest zwei Sensoren zueinander parallelen oder in einem Winkel von 1 bis 90 Grad, vorzugsweise 50 bis 70 Grad zueinander ausgerichteten Haupterfassungsrichtungen oder Erfassungsbereiche wird zuverlässig erreicht, dass auch besondere räumliche oder abgewinkelte Geometrien und dabei die Lage der Dichtung in Bezug zum Bauteil oder Bauteilbereich zuverlässig erfasst werden. So geben die räumlichen und flächigen Merkmale sowie die Geometrie des Bauteils und sofern relevant der Dichtung vor, in welchem Winkel die Haupterfassungsrichtungen zueinander ausgerichtet bzw. auszurichten sind, um die jeweiligen räumlichen und flächigen Merkmale sowie die jeweilige Geometrie zuverlässig zu erfassen.

Indem die Sensoren auf den formstabilen Bereich der Dichtung und/oder räumliche und/oder flächige Merkmale des Bauteils oder des zumindest einen Bauteilbereichs ausgerichtet sind, wird erreicht, dass die Sensoren auf weitestgehend einheitliche Ausgangspunkte oder Bezugspunkte ausgerichtet werden bzw. diese erfassen, so dass die Lageerkennung und deren Auswertung vereinfacht wird. Eine dynamische Anpassung an sich ständig ändernde Geometrien kann somit reduziert oder vermieden werden.

Mit der Weiterbildung, dass die Sensoren ortsfest beweglich oder um das Bauteil oder den Bauteilbereich führbar sind, wird die Flexibilität der Vorrichtung für unterschiedliche Automatisierungslösungen erhöht. Es ist demnach möglich die Applikation der Dichtung an ruhenden oder bewegten Bauteile zu überwachen bzw. die Lage der Dichtung zu erfassen.

Indem sich die Erfassungsrichtungen von zumindest zwei Sensoren überlappen oder überlagern, lassen sich die Erfassungsbereiche der einzelnen Sensoren kombinieren oder aus unterschiedlichen Perspektiven zusammenfassen, wodurch neben vergrößerten flächigen auch komplexe räumliche Bereiche erfasst werden können

Verschiedene Ausführungsbeispiele der Erfindung werden im Folgenden näher beschrieben.

Es zeigen:
Fig. 1 eine Fahrzeugtür als Bauteil mit umlaufender Dichtung und einer Vorrichtung mit zwei Sensoren als Fächersensoren, welche seitlich versetzt in einer Ebene liegen und die Dichtung seitlich und die jeweils seitlich der Dichtung angrenzenden Bauteilbereiche erfassen.
Fig. 2 einen Detailausschnitt der Fig. 1,
Fig. 3 eine Schnittdarstellung eines Bereiches einer Fahrzeugtür als Bauteil mit umlaufender Dichtung und eine Vorrichtung mit zwei Sensoren, welche seitlich versetzt in einer Ebene liegen und die Dichtung seitlich und die jeweils seitlich der Dichtung angrenzenden Bauteilbereiche erfassen,
Fig. 4 eine Schnittdarstellung eines Bereiches einer Fahrzeugtür als Bauteil mit umlaufender Dichtung und eine Vorrichtung mit zwei Sensoren,
Fig. 5 und 6 eine Detaildarstellung einer Schnittdarstellung eines Bauteils mit Dichtung und den Erfassungsbereichen zweier Sensoren in unterschiedlichen Perspektiven, welche seitlich versetzt in einer Ebene liegen und die Dichtung seitlich und die jeweils seitlich der Dichtung angrenzenden Bauteilbereiche mit den räumlichen, flächigen Merkmalen der Dichtung und des Bauteils erfassen,
Fig. 7 eine Detaildarstellung eines Bauteilbereiches in Schnittdarstellung und
Fig. 8 Detaildarstellung eines Bereiches einer Fahrzeugtür als Bauteil ohne Dichtung und eine Vorrichtung mit zwei Sensoren, angeordnet in unterschiedlichen Perspektiven.

Das Verfahren zur automatisierten Lageerkennung einer Dichtung 1 in Bezug auf ein Bauteil 2 oder zumindest einen Bauteilbereich 2 sieht vor, dass während oder nach der automatisierten Applikation der Dichtung 1 mittels zumindest eines Sensors 3 die Relativlage der Dichtung 1 zum Bauteil 2 oder zu dem zumindest einen Bauteilbereich 2 erfasst wird.

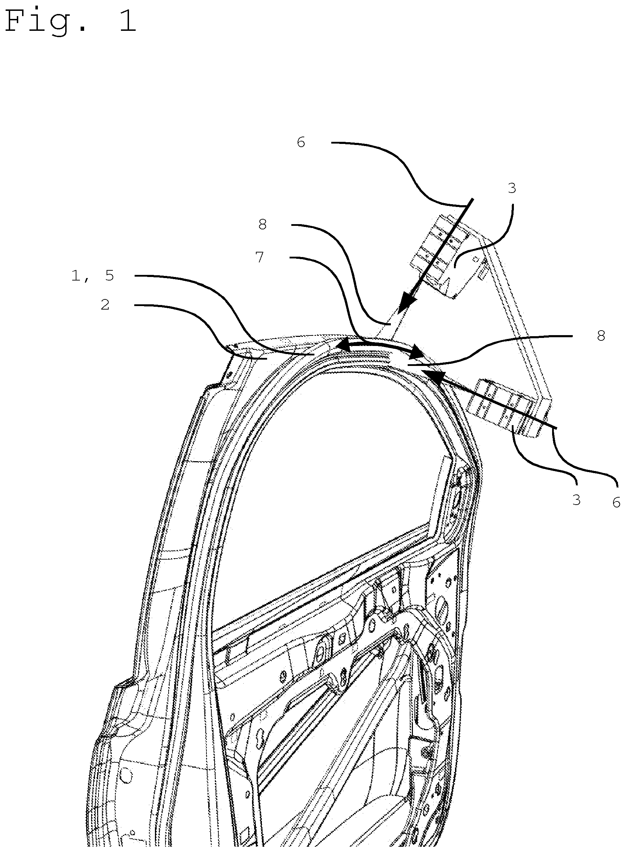

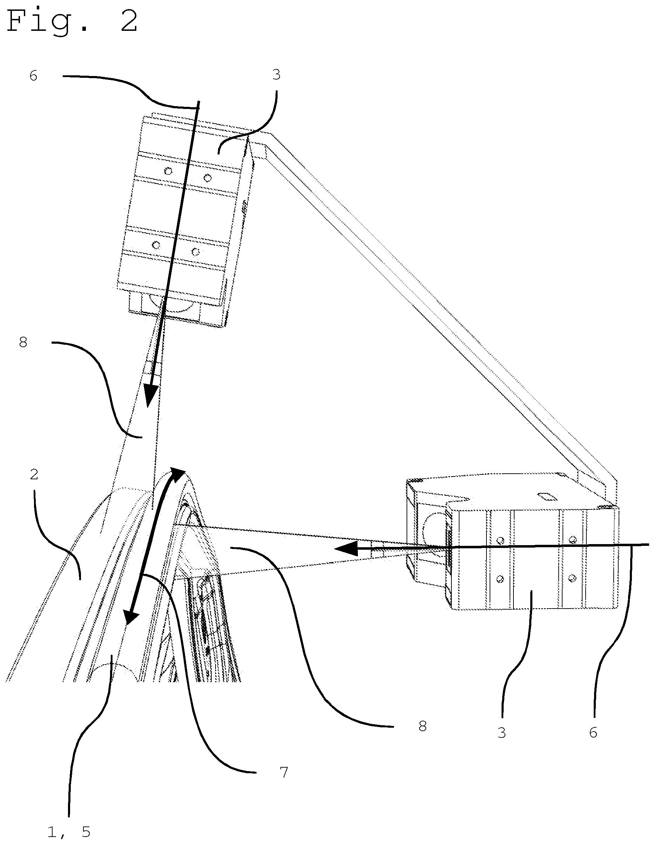

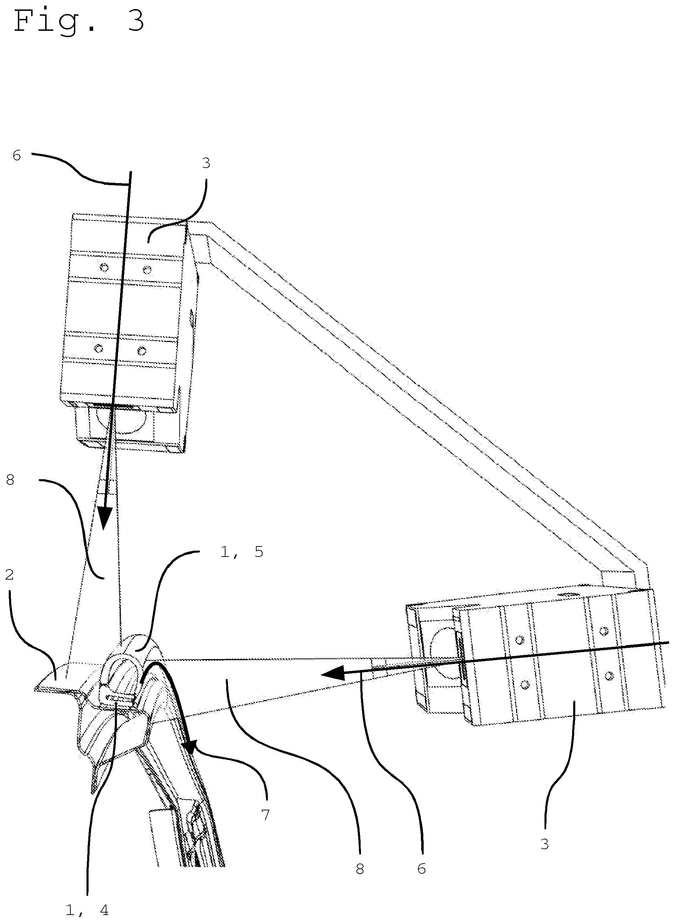

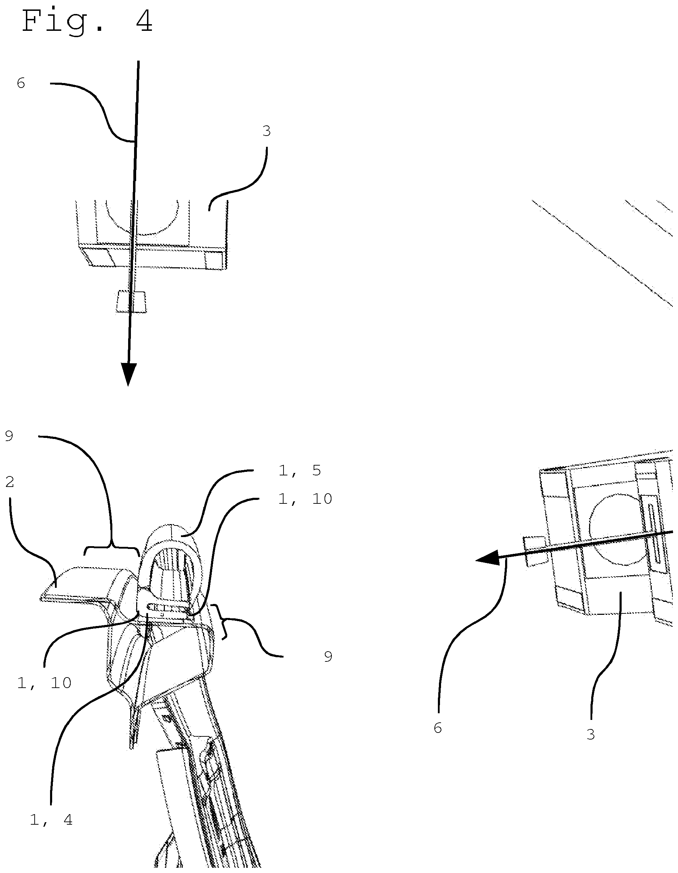

Dabei erfolgt die Lageerkennung der Dichtung 1 zur Geometrie des Bauteils 2 oder des zumindest einen Bauteilbereichs 2. Dafür räumliche und flächige Merkmale 9 des Bauteils 2 bzw. des zumindest einen Bauteilbereichs 2 erfasst, wie dies in den Figuren 1 bis 6 dargestellt ist. So kommen Falze, Absätze oder Rundungen oder Verlaufsänderungen oder Richtungsänderungen der Kontur zur Erfassung in Betracht. Diese räumlichen und/oder flächigen Merkmale 10 der Dichtung 1 werden zumindest bereichsweise erfasst. Insbesondere die Dichtung 1, welche beim Auftragen stark gestaucht wird, sorgt u.a. für eine mögliche Ungenauigkeit. Um Formabweichungen auszuschließen, wird die Dichtung 1 an einem formstabilen Bereich 4 erfasst. Dies der beispielsweise der Dichtungsfuß 4, welcher mittels eines Klebers oder mittels eines doppelseitigen Klebebandes auf des das Bauteil 2, wie eine Fahrzeugtür oder des jeweiligen Bauteilbereich 2 aufgeklebt wird und sich damit auch beim Applizieren nicht verwerfen darf und somit einen geeigneten Mess- oder Lageerfassungsbezugspunkt darstellt.

Um die Dichtung 1, welche beliebige Querschnitte aufweisen kann, zusätzlich zur Erfassung des Dichtungsfußes 4 als formstabilen Bereiches 4 für eine Lagerfassung anzupassen, ist eine Querschnittsveränderung der Dichtung 1, insbesondere des flexiblen Profils 5 dieser Dichtung 1, also oberhalb des Dichtungsfußes 4 vorgesehen. Dies kann ein Zusammenpressen für einen sehr schmalen Querschnitt oder ein zur Seite Drücken sein, um den Dichtungsfußes 4 für die Lageerfassung freizuhalten bzw. freizustellen.

Die Lageerkennung erfolgt hierbei simultan, umlaufend oder punktuell erfolgt. So ist eine dauerhafte, eine an bestimmten Punkten oder unregelmäßig erfolgende stichprobenartige Lageerkennung möglich. Je nach Art der Applikation wird das Bauteil 2 mit dem Verlauf der applizierten Dichtung 1 entlang des zumindest einen Sensors 3 oder der zumindest eine Sensor 3 wird entlang der applizierten Dichtung 1 geführt. Die erfolgt vorzugsweise mittels eines Roboters.

Die Lageerkennung erfolgt als Abstandsmessung, vorzugsweise mittels zumindest eines Fächersensors bzw. Lichtschnittsensors, wobei damit die Lageerkennung als Triangulationsverfahren erfolgt.

Zur Verbesserung des Verfahrens kommen zwei Sensoren 3 zum Einsatz, wobei die Sensoren 3 zueinander versetzt die Dichtung 3 von beiden Seiten erfassen. Damit lassen sich auch beiderseits der Dichtung 3 das Bauteil 2 bzw. Bauteilbereich 2 erfassen. Damit erfolgt die Lageerfassung ausgehend von zwei Bauteilbereichen 2, jeweils seitlich der Dichtung 1 und von der Dichtung 1 aus. So wird auch der formstabile Bereich 4 auf beiden Seiten der Dichtung 1 erfasst.

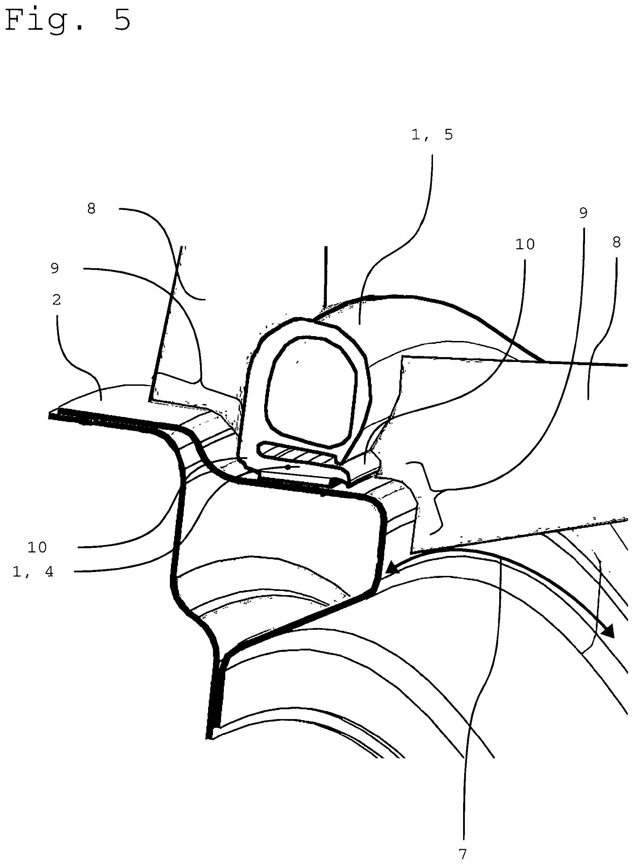

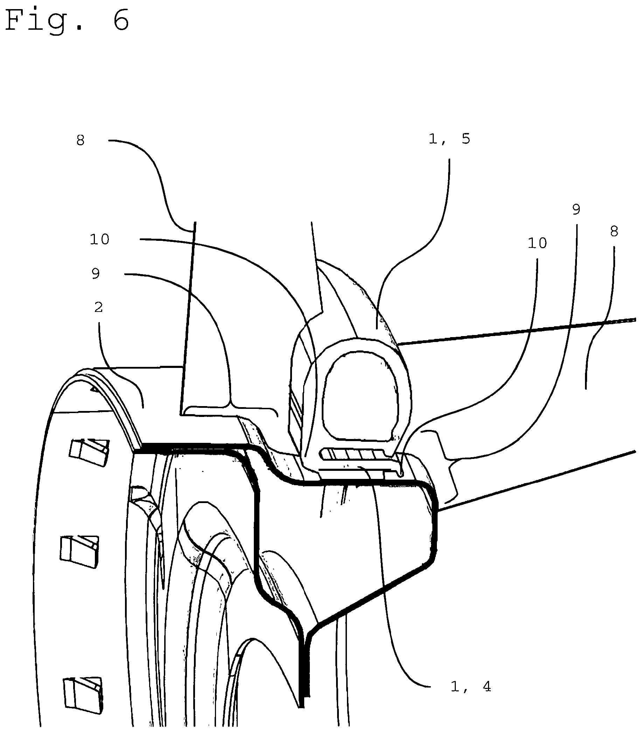

Die Fächersensoren erfassen jeweils die Dichtung 1 und den jeweils seitlich der Dichtungen 1 angrenzen Bauteilbereich 2 mit seiner individuellen Kontur oder Geometrie, wie dies in den Figuren 1 bis 6 dargestellt ist. In den Figuren 5 und 6 sind diese seitlichen Erfassungsbereiche von Dichtung 1 und Bauteil 2 bzw. des Bauteilbereichs 2 sowie die räumlichen und flächigen Merkmale 9 des Bauteils 2 oder des Bauteilbereichs 2 und die räumlichen und flächigen Merkmale 10 der Dichtung 2 insbesondere jeweils rechts und links dargestellt. Erkennbar sind die weiten Bereiche, in denen das Bauteil 2 und die Dichtung 1 erfasst werden.

Das Verfahren zur automatisierten Lageerkennung einer Dichtung 1 lässt sich mittels der erfindungsgemäßen Vorrichtung durchführen, wobei der zumindest eine Sensor 3 so angeordnet ist, dass seine Haupterfassungsrichtung 6 zur Verlaufsrichtung 7 der Dichtung 1 oder des Bauteils 2 oder des zumindest einen Bauteilbereichs 2 rechtwinklig oder davon in einem Winkel von bis zu 45 Grad abweichend ausgerichtet ist und dass der zumindest eine Sensor 3 mit einem Erfassungsbereich 8 die Dichtung 1 und das Bauteil 2 oder den zumindest einen Bauteilbereich 2 an der Dichtung 1 erfasst.

Wie in den Figuren 1 bis 6 dargestellt ist, kommen beispielsweise zwei Sensoren 3 zum Einsatz. Diese sind seitlich zueinander versetzt und in einer Ebene angeordnet und, wie in den Figuren 1 bis 4 dargestellt, an einem Trägerblech oder Träger befestigt, dessen Enden entsprechend der Haupterfassungsrichtungen 6 oder die Erfassungsbereiche 8 für die Sensoren 3 abgewinkelt sind, wobei das Trägerblech an einer Halterung oder einem Roboterarm (nicht dargestellt) befestigt ist. Alternativ können diese seitlich zueinander versetzt angeordneten Sensoren 3 auch entlang der Verlaufsrichtung 7 der Dichtung 1 versetzt, also nicht in einer Ebene angeordnet sein (nicht Teil der Erfindung).

Die Sensoren 3 sind auf den formstabilen Bereich 4 der Dichtung 1 und auf räumlichen sowie flächigen Merkmale 9 des Bauteils 2 oder des jeweiligen Bauteilbereichs 2 ausgerichtet.

In Abhängigkeit der Dichtung und der Geometrie des Bauteils 2 sind zwei oder mehr Sensoren 3 so angeordnet, dass die Haupterfassungsrichtungen 6 oder die Erfassungsbereiche 8 der Sensoren 3 zueinander in einem Winkel von etwa 85 Grad ausgerichtet, wie dies in den Figuren 1 bis 6 dargestellt ist.

Je nach Art der Dichtung 1 und des Bauteils 2 ist es angebracht, dass sich die Erfassungsbereiche 8 von zumindest zwei Sensoren 3 überlappen oder überlagern. Je nach Art und Geometrie der Dichtung 1 ist es jedoch nicht ausgeschlossen, dass das Überlappen der Erfassungsbereiche 8 durch die Dichtung 1 zum Teil oder vollständig abgeschattet wird.

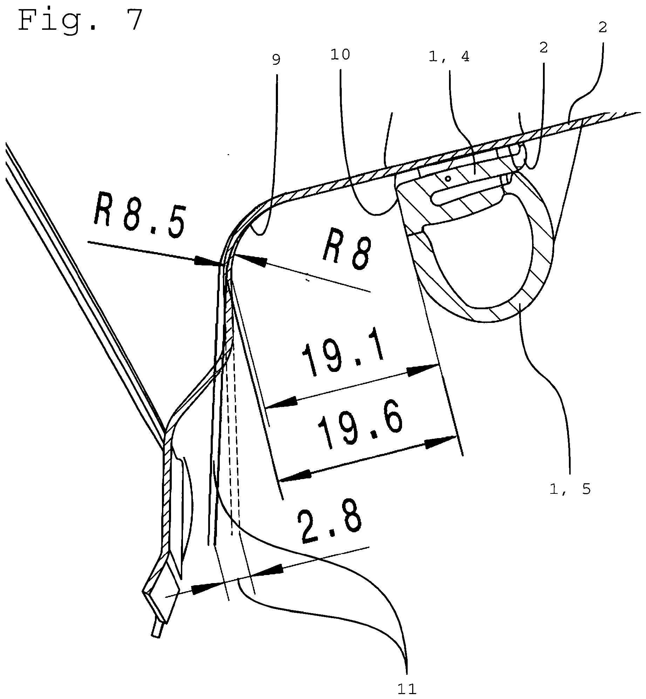

Die Figur 7 zeigt eine Schnittdarstellung eines Bauteils 2 mit einer Dichtung 1. Dargestellt sind beispielhafte mögliche Abweichungen 11 in der Bauteilgeometrie, welche unberücksichtigt zu einer fehlerhaften Applikation der Dichtung 1 führen würden.

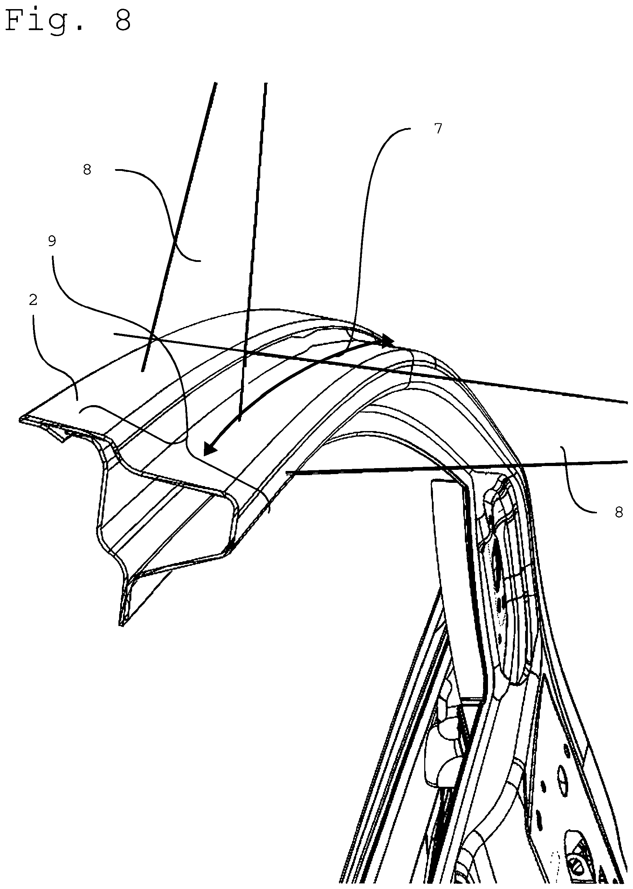

Figur 8 zeigt, dass mittel der Sensoren 3 auch eine Bauteilvermessung ohne Dichtung 1 möglich ist. Die Erfassungsbereiche 8 der Sensoren 3 überlappen sich in diesem Fall auf dem Bauteil 2 im zu erfassenden Bereich.

Das Verfahren wurde an einem Türderivat als Bauteil 2 sowie mittels robotergeführten Sensoren 3 und auch an einem robotergeführten Bauteil 2 durchgeführt.

Beispielsweise ist die Relativlage der Dichtung 1 als Türdichtung auf dem Türflansch als Bauteilbereich 2 zu erfassen. Ziel sollte dabei die Erkennung des Dichtungsfußes 4 in Abhängigkeit des Türflansches sein, um Fertigungstoleranz weitestgehend auszuschließen.

Das Messverfahren ermöglicht dabei ein zuverlässiges Messen an definierten Messpunkten. Es ist vorgesehen, dass während einer kompletten Applikation, also umlaufend Messergebnisse erstellt und ausgewertet werden können. Hierbei ist ein unmittelbarer Einfluss auf die Applikation möglich.

Eine konkrete Ausführung der Erfindung beruht aktuell auf sogenannten Lichtschnittsensoren, welche mittels des bekannten Triangulationsverfahrens einen Laserstich erzeugen, welcher dann die Erkennung von Geometrien als räumliches, flächiges Merkmal 9, 10 zulässt und resultierend daraus Messergebnisse ausgeben kann. Es ist vorgesehen, dass die Erkennung auch mittels anderer Technologien erfolgt.

Grundsätzlich ist die Antastung der Übergänge von einem Radius in eine Gerade als räumliches, flächiges Merkmal 9 am jeweiligen Bauteil 2 , der jeweiligen Bauteilfläche als Bauteilbereich 2 oder als räumliches, flächiges Merkmal 10 an der jeweiligen Dichtung 1 oder eine Bohrung oder eine andere räumliche oder flächige Besonderheit als räumliches, flächiges Merkmal 9 des Bauteils 2 als bevorzugtes Merkmal für die Bestimmung der Lage der Dichtung 1 geeignet. Welches Merkmal dafür am besten geeignet ist richtet sich vorzugsweise nach der zur Verfügung stehenden Geometrie des Bauteils 2 oder einer andere räumlichen oder flächigen Besonderheit der Dichtung 1 und dem Winkel des Sensors 3 zu dem jeweiligen Merkmal.

Die Breite der Dichtung 1 kann parallel erfasst werden, sie ist jedoch der Übersichtlichkeit halber nicht eingezeichnet.

Sensoren 3 erkennen dabei den formstabilen Rücken der Türdichtung sowie räumliche und flächige Merkmale 9 der Tür, wie beispielsweise die Übergänge von Radien zu Geraden. Um dies zuverlässiger zu gewährleisten, werden im konkreten Ausführungsbeispiel zwei Sensoren 3 angebracht, welche zum einen lotrecht, also rechtwinklig auf die Dichtung 1 schauen und zum anderen in einen variierenden Winkel von ca. 50 - 70 Grad ebenfalls zur Dichtung 1 angebracht sind. Der Messaufbau gemäß der Figuren 1 bis 8 zeigt eine schematische Anordnung der Sensoren 3 für die Prüfung der Lage der Dichtung 1 über zwei Bezugskanten. Auf Grund der Blickperspektive ist eine Anordnung von zwei Sensoren notwendig.

An den einzelnen Messstellen werden die Abstände als einfache Profilmessung ausgeführt. Dabei können die Messergebnisse vom linken und rechten Sensor 3 synchron verarbeitet und verrechnet werden.

Für das konkrete Ausführungsbeispiel wurden die Zugänglichkeit der Messstellen sowie die Stabilität der Messung untersucht. Dabei konnte an allen Messstellen die Kontur erfasst werden und es wurden stabile Profile geliefert.

Für die Überwachung der Lage der Dichtung 1 sind drei unterschiedliche Konzepte möglich, die sich in Ihrem Detailgrad und der Möglichkeit andere Fehlerursachen/Fehlerbilder zu erfassen unterscheiden.
- A Die einfachste Variante stellt dabei die Verfolgung der AbsolutPosition der Dichtung 1 dar. Dies kann auch mit nur einem Sensor 3 erfolgen.
- B Um Unsicherheiten in der Griffposition der Tür auszuschließen kann zusätzlich die Lage der Dichtung 1 relativ zu einer Türgeometrie als räumliches, flächiges Merkmal 9 gemessen werden.

C Um Unsicherheiten an der Türgeometrie als räumliches, flächiges Merkmal 9 selbst, bedingt durch Fertigungstoleranzen im Karosseriebau, auszuschließen, kann im dritten Schritt die Erweiterung der Referenzmessung auf zwei Türgeometrien je Schnitt erfolgen. Hierfür kommen zwei Sensoren zum Einsatz. Je nach Sensorwahl kann jedoch auch nur ein Sensor 3 ausreichen.

Eine Umsetzung besteht beispielsweise darin, dass die Sensoren 3 um ein festgelegtes Bauteil 2 geführt werden, so dass während der Dichtungsapplikation bzw. für die Lageerkennung eine Verfahrung der Sensoren 3 notwendig ist, so dass an dem an einem statischen Haltesystem befestigten Bauteil 2 die Lage der Dichtung 1 auf beispielsweise dem Türflansch als Bauteil 2 relativ gemessen wird. Hierbei ist das Bauteil 2 für den Applikationsvorgang und die Lageerkennung ortsfest fixiert und die für die Applikation und die Lagekontrolle erforderlichen Komponenten werden am Bauteil 2, beispielsweise einer Fahrzeugtür vorbeigeführt bzw. vorbeibewegt, während diese vorübergehend ortsfest ist.

Weiterhin besteht eine Umsetzung darin, die Anbindung der Sensoren 3 starr zu gestalten, d.h., dass während der Dichtungsapplikation keine Verfahrung der Sensoren 3 notwendig ist, so dass mittels eines statischen Messsystems die Lage der Dichtung 1 auf dem Türflansch als Bauteil 2 relativ gemessen werden kann. Hierbei wird das Bauteil 2, beispielweise die Fahrzeugtür für die Applikation und die Lagekontrolle an den jeweiligen Komponenten für die Applikation und die Lagekontrolle vorbeigeführt bzw. vorbeibewegt, während diese ortsfest sind.

In einem Ausführungsbeispiel werden zwei Sensoren 3 an einem entsprechenden Aufbau angeordnet. Dabei wird die Tür als Bauteil 2, geführt von einem Roboter, an einem simulierten Auftragskopf entlanggeführt und es wird kurz vor bzw. hinter dem Auftragskopf gemessen. Da sich die Dichtungswulst beim Andrücken der Dichtung 1 zur Türinnenseite drückt, wird einer der Sensoren 3 auf der Türinnenseite vorteilhaft in einem 90 Grad-Winkel zur Dichtung angeordnet. Zur kollisionsfreien Erfassung des Dichtungsfußes 4 auf beiden Seiten der Dichtung 1 sind die Sensoren 3 im Abstand von beispielsweise 200mm zur Dichtung angeordnet. Eine Nachführung der Sensoren 3 mit der Türbewegung über einen zusätzlichen Roboter ist nicht zwingend erforderlich, da dadurch keine Abschattungen auftreten und etwaige Messfehler durch eine schräge Projektion auch in der Verarbeitung kompensiert werden können.

Im konkreten Ausführungsbeispiel kommt als Sensor 3 beispielsweise ein Messkopf LJ-V7200 der Fa. Keyence zum Einsatz. Dieser beispielhafte Messkopf, auch als Messtaster bezeichnet, besitzt ein Funktionsprinzip, bei welchem der zu einer Linie aufgeweitete Laserstrahl auf die Messobjektoberfläche projiziert wird. Das davon reflektierte Licht trifft auf den Empfänger, beispielsweise einem HSEa-CMOS. Durch die Erkennung der Positions- und Formänderung auf dem Sensor 3 werden die Wegverschiebung und Form gemessen. Die Vorteile beim Einsatz eines Messkopfes, auch als Messtaster bezeichnet, gegenüber eines Kamerasystems ist, dass der Messkopf kalibrierte Höhenwerte liefert und eine Nachkalibrierung nicht erforderlich ist. Weiterhin gibt es keine verstellbaren Komponenten wie ein Objektiv oder eine Blende. Die Tiefenschärfe ist über den gesamten Messbereich gegeben. Zudem ist der Messkopf unempfindlich gegenüber Fremdlicht bis zu einer typenbezogenen maximalen Umgebungshelligkeit.

Dennoch können auch als Sensor 3 Kamerasysteme zum Einsatz kommen, welche mittels an sich bekannter dreidimensionaler Erfassungsmethoden eine sequentielle und auch kontinuierliche Messung ermöglichen.

### Zusammenstellung der Bezugszeichen

- 1: - Dichtung
- 2: - Bauteil, Bauteilbereich, Fahrzeugtür
- 3: - Sensor
- 4: - formstabiler Bereich, Dichtungsfuß
- 5: - flexibles Profil
- 6: - Haupterfassungsrichtung
- 7: - Verlaufsrichtung
- 8: - Erfassungsbereich
- 9: - räumliches, flächiges Merkmal des Bauteils
- 10: - räumliches, flächiges Merkmal der Dichtung
- 11: - Abweichung

## Patentansprüche

1. Vorrichtung zur Durchführung eines Verfahren zur automatisierten Lageerkennung einer aufgeklebten Dichtung (1) in Bezug auf ein Bauteil (2) oder zumindest einen Bauteilbereich (2) während oder nach einer automatisierten Applikation der Dichtung (1), wobei mittels zumindest eines Sensors (3) die Relativlage der Dichtung (1) zum Bauteil (2) oder der Dichtung (1) zu dem zumindest einen Bauteilbereich (2) erfasst wird, wobei die Lageerkennung der Dichtung (1) zu zumindest einer Geometrie des Bauteils (2) oder des zumindest einen Bauteilbereichs (2) erfolgt und die Dichtung (1) an einem formstabilen Bereich (4) erfasst wird und räumliche und/oder flächige Merkmale (9) des Bauteils (2) oder des zumindest einen Bauteilbereichs (2) erfasst werden, wobei der zumindest eine Sensor (3) so angeordnet ist, dass seine Haupterfassungsrichtung (6) zur Verlaufsrichtung (7) der Dichtung
(1) oder des Bauteils (2) oder des zumindest einen Bauteilbereichs
(2) rechtwinklig oder davon in einem Winkel von bis zu 45 Grad abweichend ausgerichtet ist und der zumindest eine Sensor (3) mit einem Erfassungsbereich (8) die Dichtung (1) und das Bauteil (2) oder den zumindest einen Bauteilbereich (2) erfasst, **dadurch gekennzeichnet, dass** die Vorrichtung zwei oder mehr Sensoren (3) enthält, wobei die jeweiligen Erfassungsbereiche (8) zumindest bei zwei der Sensoren (3) in einer Ebene angeordnet sind und wobei die Sensoren (3) an dem formstabilen Bereich (4) der Dichtung (1) und auf räumliche und/oder flächige Merkmale (9) des Bauteils (2) oder des zumindest einen Bauteilbereichs (2) ausgerichtet sind.

2. Vorrichtung nach Anspruch 1,
**dadurch gekennzeichnet,**
**dass** bei zwei oder mehr Sensoren (3) zumindest zwei Sensoren (3) seitlich zueinander versetzt angeordnet sind.

3. Vorrichtung nach einem der Ansprüche 1 bis 2,
**dadurch gekennzeichnet,**
**dass** bei zwei oder mehr Sensoren (3) die Haupterfassungsrichtungen (6) oder die Erfassungsbereiche (8) von zumindest zwei Sensoren (3) zueinander parallel oder in einem Winkel von 1 bis 90 Grad, vorzugsweise 50 bis 70 Grad zueinander ausgerichtet sind.

4. Vorrichtung nach einem der Ansprüche 1 bis 3,
**dadurch gekennzeichnet,**
**dass** die Sensoren (3) ortsfest beweglich oder um das Bauteil (2) oder den zumindest einen Bauteilbereich (2) führbar sind.

5. Vorrichtung nach einem der Ansprüche 1 bis 4,
**dadurch gekennzeichnet,**
**dass** sich die Erfassungsbereiche (8) von zumindest zwei Sensoren (3) überlappen oder überlagern.

## Claims

1. Device for implementing a method for the automated position detection of an adhered seal (1) with respect to a component (2) or at least one component area (2) during or after an automated application of the seal (1), wherein the relative position of the seal (1) to the component (2) or of the seal (1) to the at least one component area (2) is detected by means of at least one sensor (3), wherein the positional detection of the seal (1) relative to at least a geometry of the component (2) or of the at least one component area (2) is effected and the seal (1) is detected at a dimensionally stable area (4) and spatial and/or planar features (9) of the component (2) or of the at least one component area (2) are detected,
wherein at least one sensor (3) is arranged in such a way that its main detection direction (6) is aligned at right angles to the extending direction (7) of the seal (1) or of the component (2) or of the at least one component area (2) or deviates therefrom by an angle of up to 45 degrees, and the at least one sensor (3) detecting the seal (1) and the component (2) or the at least one component area (2) with a detection range(8)
**characterised in**
**that** the device contains two or more sensors (3), wherein a respective detection range (8) is arranged in a plane at least in the case of two of the sensors (3), and the sensors (3) are aligned with the dimensionally stable area (4) of the seal (1) and with spatial and/or planar features (9) of the component (2) or of the at least one component area (2).

2. Device according to a claim 1,
**characterised in**
**that**, in the case of two or more sensors (3), at least two sensors (3) are arranged laterally offset with respect to one another.

3. Device according to one of the claims 1 to 2,
**characterised in**
**that**, in the case of two or more sensors (3), the main detection directions (6) or a detection range (8) of at least two sensors (3) are aligned parallel to one another or at an angle of 1 to 90 degrees, preferably 50 to 70 degrees, to one another.

4. Device according to one of the claims 1 to 3,
**characterised in**
**that** the sensors (3) are movable in a stationary manner or can be guided around the component (2) or the at least one component area (2) .

5. Device according to one of the claims 1 to 4,
**characterised in**
**that** a detection range (8) of at least two sensors (3) overlap or is superimposed.

## Revendications

1. Dispositif de réalisation d'un procédé de détection de position automatisée d'un joint d'étanchéité collé (1) par rapport à un composant (2) ou du moins une zone d'un composant (2) pendant ou après l'application automatisée du joint d'étanchéité (1), la position relative du joint d'étanchéité (1) par rapport au composant (2) ou du joint d'étanchéité (1) par rapport à l'au moins une zone du composant (2) est détectée au moyen d'un capteur (3) , la détection de position du joint d'étanchéité (1) étant effectuée par rapport à au moins une géométrie du composant (2) ou de l'au moins une zone du composant (2) et le joint d'étanchéité (1) étant détecté sur une zone de forme stable (4) et des coordonnées spatiales et/ou planes (9) du composant (2) ou de l'au moins une zone du composant (2) étant détectées,
l'au moins un capteur (3) étant disposé de telle sorte que sa direction de détection principale (6) est orientée à un angle droit ou à un angle s'écartant de jusqu'à 45 degrés par rapport à la direction d'extension (7) du joint d'étanchéité (1) ou du composant (2) ou de l'au moins une zone du composant (2) et l'au moins un capteur (3) détectant le joint d'étanchéité (1) et le composant (2) ou l'au moins une zone du composant (2) au moyen d'une zone de détection (8),
**caractérisé en ce que**
le dispositif comporte deux ou plusieurs capteurs (3), les zones de détection respectives (8) étant disposées dans un plan sur au moins deux des capteurs (3) et les capteurs (3) étant orientés sur la zone de forme stable (4) du joint d'étanchéité (1) et sur des coordonnées spatiales et/ou planes (9) du composant (2) ou de l'au moins une zone du composant (2).

2. Dispositif selon la revendication 1,
**caractérisé en ce que**
en présence de deux ou plusieurs capteurs (3), au moins deux capteurs (3) sont disposés avec un décalage latéral l'un par rapport à l'autre.

3. Dispositif selon les revendications 1 à 2,
**caractérisé en ce que**
en présence de deux ou plusieurs capteurs (3), les directions de détection principales (6) ou les zones de détection (8) d'au moins deux capteurs (3) sont orientées de manière parallèle ou à un angle de 1 à 90 degrés, de préférence de 50 à 70 degrés, l'un par rapport à l'autre.

4. Dispositif selon les revendications 1 à 3,
**caractérisé en ce que**
les capteurs (3) peuvent être guidés de manière mobile à demeure ou autour du composant (2) ou de l'au moins une zone du composant (2).

5. Dispositif selon les revendications 1 à 4,
**caractérisé en ce que**
les zones de détection (8) d'au moins deux capteurs (3) se chevauchent ou se superposent.
